# EUROPÄISCHE PATENTSCHRIFT

(11) **EP 1 276 668 B1**
(45) Veröffentlichungstag und Bekanntmachung des Hinweises auf die Patenterteilung: **03.11.2004**
(21) Anmeldenummer: 01945055.0
(22) Anmeldetag: 27.04.2001
(51) Int. Cl.: B65B 9/13

(54) **VERFAHREN UND VORRICHTUNG ZUM UMHÜLLEN VON STÜCK- ODER PACKGUT**
METHOD AND DEVICE FOR WRAPPING UNIT LOADS OR PACKAGED GOODS
PROCEDE ET DISPOSITIF SERVANT A ENVELOPPER DES ARTICLES A EMBALLAGE INDIVIDUEL OU PAR LOTS

(30) Priorität: 28.04.2000 DE 10020856
(43) Veröffentlichungstag der Anmeldung: 22.01.2003
(73) Patentinhaber: MSK-VERPACKUNGS-SYSTEME GESELLSCHAFT MIT BESCHRÄNKTER HAFTUNG, D-47533 Kleve (DE)
(72) Erfinder: HANNEN, Reiner, 47546 Kalkar-Wissel (DE); VERMEULEN, Norbert, 47533 Kleve (DE)
(74) Vertreter: Dönges, Jörg
(86) Internationale Anmeldenummer: PCT/EP2001/004756
(87) Internationale Veröffentlichungsnummer: WO 2001/083301

(56) Entgegenhaltungen:
- DE-A- 3 101 310
- DE-A- 3 103 130

## Beschreibung

Die Erfindung betrifft ein Verfahren zum Umhüllen von Stück- oder Packgut mit einem zumindest in etwa haubenförmigen elastischen Folienabschnit, gemäss dem Oberbegriff des Anspruchs 1.

Aus der Praxis sind derartige Verfahren bekannt, bei denen sowohl das Raffen als auch das Überziehen des Folienabschnittes über das Stück- oder Packgut mittels einer kombinierten Raff- und Überzieheinrichtung für die Handhabung des Folienabschnittes erfolgt. Bisher werden derartige verfahren im wesentlichen in der chemischen Industrie eingesetzt, wobei die Anforderungen an die zu verpackenden Stückzahlen eher gering sind.

Auch ist aus der DE 31 01 310 ein gattunsgemässes Verfahren zum Überziehen von Verpackungsgut mit einer aus einem Schlauchabschnitt hergestellten Haube bekannt, bei dem zur Steuerung des Stapelns der Falten während des In-Falten-Legens ein Überstülp-Rahmen abgesenkt wird und der Faltrahmen ortsfest bleibt (Sp. 13, Z. 1-6). Dabei erfolgt ausschließlich das eigentliche Falten des Schlauches durch die Faltvorrichtung, wohingegen das Ablegen und Speichern der erzeugten Falten auf dem Überstülp-Rahmen geschieht.

Sobald der Überstülp-Rahmen in seiner untersten Position ist, kann das verpackte Gut abtransportiert werden, da die Folienhaube dann nicht mehr mit dem Überstülp-Rahmen verbunden ist.

Nachteilig hierbei ist, dass zwar mit der Faltenbildung durch die Faltvorrichtung begonnen werden kann, wenn der Überstülp-Rahmen noch nicht an seiner oberen Position bei der Faltvorrichtung angekommen ist, also z.B. während des Abtransports des vorhergehend verpackten Gutes oder Gutstapels, jedoch dem Faltvorgang insofern Grenzen gesetzt sind, als dass der Überstülp-Rahmen, auf dem der gefaltete Schlauchabschnitt abgelegt wird, noch nicht zur Verfügung steht. Aus der DE 31 03 130 A1 ist eine Verpackungsmaschine bekannt, die eine Raffeinrichtung und mehrere, von der Raffeinrichtung zu dem beabstandet angeordneten Verpackungsgut verfahrbare Überstülp-Rahmen aufweist.

Nachteilig hierbei ist, dass durch die Verfahrwege ein aufwändiger technischer Aufbau resultiert.

Auch ist der Zeitvorteil gegenüber bestehenden Maschinen üblicher Bauart eher von geringem Ausmaß.

Ein weiterer Nachteil liegt darin, dass bei üblichen Verfahren der eingangs genannten Art die Folienhaube häufig in der Maschine selbst durch Verschweißen benachbarter Lagen eines insbesondere faltenschlauchförmigen Folienabschnittes erstellt wird, und somit die Schweißnaht während des Streckens noch nicht oder zumindest noch nicht vollständig ausgekühlt ist. Dadurch ist die Schweißnaht weniger belastbar und es kann zu einer Lochbildung durch die Spannungen während des Streckens kommen. Hieraus resultiert dann eine Schweißnaht geringerer Qualität an der fertig verpackten Ware.

Aufgabe der Erfindung ist es, ein Verfahren der eingangs genannten Art anzugeben, mit dem deutlich schneller verpackt werden kann und dass somit auch in Industriezweigen mit hohen Produktionszahlen, z. B. dem Weißgerätebereich (Spülmaschinen, Kühlschränke etc.) eingesetzt werden kann. Auch soll die Schweißnaht verbessert werden. Dabei soll die Vorrichtung zur Durchführung des Verfahrens einen einfachen technischen Aufbau aufweisen, so dass neben einer geringen Stellfäche ein reduzierter Material- und Wartungsaufwand erzielt wird.

Diese Aufgabe wird gelöst durch ein Verfahren zum Umhüllen von Stück- oder Packgut mit einem zumindest in etwa haubenförmigen elastischen Folienabschnitt, mit den kennzeichnenden Merkmalen des Anspruchs 1.

Das Verfahren kann sowohl in horizontaler als auch in vertikaler Ausrichtung erfolgen.

Die Halteeinrichtungen strecken durch Auseinanderbewegen in der Ebene der Stück- oder Packgutbreite und -länge den Folienabschnitt, und die Halteeinrichtungen überziehen durch Bewegen entlang der Stück- oder Packguthöhe den haubenförmigen Folienabschnitt über das Stück- oder Packgut.

Vorzugsweise kann die haubenähnliche Form des Folienabschnittes unmittelbar vor dem Raffen durch die Raffeinrichtung durch ein zumindest im Bereich der Ecken erfolgendes Verschweißen von zumindest benachbarten Lagen des insbesondere faltenschlauchförmigen Folienabschnittes erzielt werden, so dass der Schweißnaht der vorabgefertigen Folienhaube eine längere Abkühlzeit bis zum Strecken zur Verfügung steht, und die Schweißnaht somit beim Strecken bereits belastbarer ist und eine Lochbildung aufgrund der Spannungen beim Dehnen vermieden wird. Somit hat auch die Schweißnaht der fertiggestellten Folienverpackung eine bessere Qualität.

Die Erfindung betrifft weiterhin eine Vorrichtung zum Umhüllen von Stück- oder Packgut mit einem zumindest in etwa haubenförmigen elastischen Folienabschnitt, gemäss dem Oberbegriff des Anspruchs 5.

Aus der Praxis sind derartige Vorrichtungen bekannt, bei denen eine kombinierte Raff- und Überzieheinrichtung für die Handhabung des Folienabschnittes zuständig ist.

Neben dem bereits eingangs geschilderten Stand der Technik ist weiterhin aus der DE 31 01 310 eine gattungsgemässe Verpackungsvorrichtung bekannt, bei der zur Steuerung des Stapelns der Falten während des In-Falten-Legens ein Überstülp-Rahmen abgesenkt wird und der Faltrahmen ortsfest bleibt (Sp. 13, Z. 1-6). Dabei erfolgt ausschließlich das eigentliche Falten des Schlauches durch die Faltvorrichtung, wohingegen das Ablegen und Speichern der erzeugten Falten auf dem Überstülp-Rahmen geschieht.

Bisher werden derartige Vorrichtungen im Wesentlichen in der chemischen Industrie eingesetzt, wobei die Anforderungen an die zu verpackenden Stückzahlen eher gering sind. Die Nachteile der vorerwähnten Verpackungsvorrichtungen sind bereits eingangs ausgeführt worden.

Insofern ist es ebenfalls Aufgabe der Erfindung, eine Vorrichtung der vorgenannten Art anzugeben, die deutlich schneller verpackt und die somit auch in Industriezweigen mit hohen Produktionszahlen, z. B. den Weißgerätebereich (Spülmaschinen, Kühlschränke etc.) eingesetzt werden kann.

Diese Aufgabe wird durch die kennzeichnenden Merkmale des Anspruchs 5 gelöst.

Die Anlage kann sowohl in horizontaler als auch in vertikaler Ausrichtung eingesetzt werden.

Vorzugsweise kann wenigstens eine zumindest benachbarte Lagen des insbesondere faltschlauchförmigen Folienabschnittes zur Erzielung einer haubenähnlichen Form zumindest im Bereich der Ecken jeweils miteinander verbindende Schweißeinrichtung vorgesehen sein, so dass der haubenförmige Folienabschnitt an seinem oberen Ende Bereiche hat, die beim Überziehen über das Stück- oder Packgut an dessen Oberkante hängenbleiben und somit das Stück- oder Packgut vollständig umhüllt wird.

Durch das Verschweißen der Folienhaube zu einem Zeitpunkt, an dem die vorhergehende Folienhaube noch an dem Packgut angebracht wird, steht der nachfolgenden, gerade verschweißten Folienhaube eine längere Abkühlzeit zur Verfügung, so dass die Schweißnaht erst nach vorhergehendem Raffen der Folienhaube in deutlich abgekühltem, insbesondere bereits vollständig ausgekühltem und somit belastbarerem Zustand gestreckt wird.

Somit wird eine Lochbildung durch die Spannungen während des Streckens reduziert bzw. vollständig eliminiert und die Schweißnahtqualität der fertiggestellten Verpackung ist von besserer Qualität.

Die Raffeinrichtung kann wenigstens zwei diagonal gegenüberliegende Raffräder aufweisen, so dass eine gleichmäßige Raffung über den gesamten Umfang des Folienabschnittes gewährleistet ist.

Vorteilhafterweise kann die Raffeinrichtung den Folienabschnitt während des Raffens innenseitig haltende und den Folienabschnitt bei der Übernahme durch die Überzieheinrichtung freigebende, insbesondere verschwenkbare Halteelemente aufweisen, so dass mit geringen und einfach zu steuernden Verfahrwegen, Verschwenkungen oder dergleichen eine Übergabe/Übernahme des Folienabschnittes erfolgen kann.

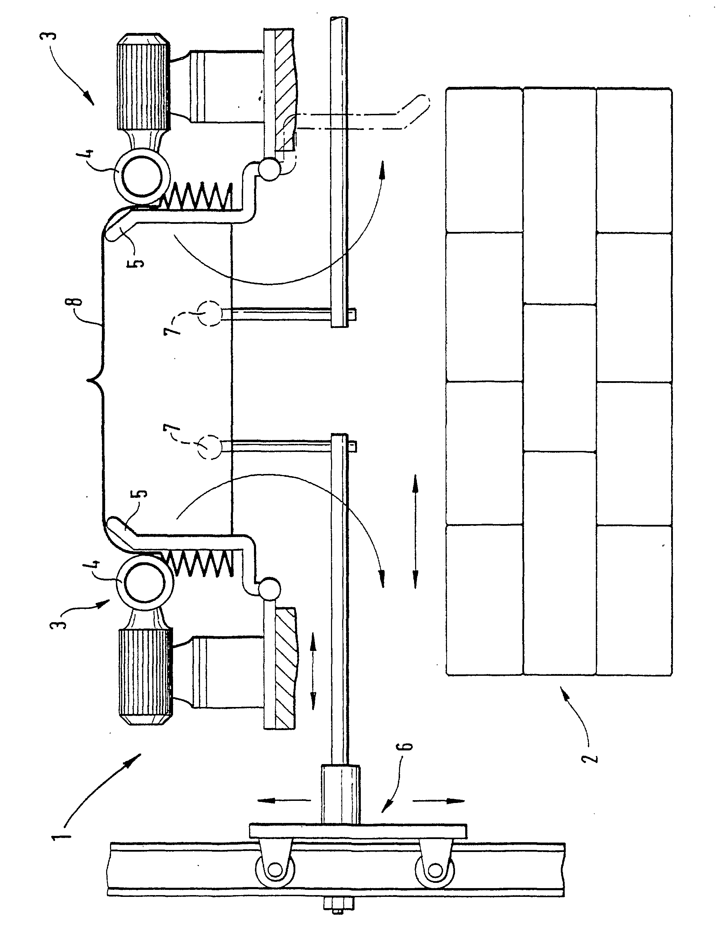

Im Folgenden wird ein in der Zeichnung dargestelltes Ausführungsbeispiel der Erfindung erläutert. Die einzige Figur zeigt eine Vorrichtung 1 zum Umhüllen von Stück- oder Packgut 2, die jeweils eine separate Raffeinrichtung 3 mit Raffrädern 4 und verschwenkbaren Halteelementen 5 und eine getrennt von der Raffeinrichtung 3 entlang des Stück- oder Packgutes 2 bewegliche Überziehreinrichtung 6 mit Halteeinrichtungen 7 aufweist.

Die Halteeinrichtungen 7 sind sowohl in Richtung der Stück- und Packguthöhe als auch in der Ebene von Stück- oder Packgutbreite und -länge verfahrbar.

Somit kann ein erster Folienabschnitt 8 nach dem Raffen in der Raffeinrichtung 3 durch Aufwärts- und Auseinanderbewegen der Halteeinrichtungen 7 von der Überzieheinrichtung 6 übernommen werden, wobei die Halteelemente 5 der Raffeinrichtung 3 durch Abwärtsschwenken den Folienabschnitt 8 freigeben.

Anschließend wird der erste Folienabschnitt 8 nach Absenken der Halteeinrichtungen 7 durch Auseinanderbewegen der Halteeinrichtungen 7 in der Ebene von Stück- oder Packgutbreite und -länge gestreckt und dann über das Stück- oder Packgut 2 übergezogen, wobei das obere Ende des Folienabschnittes 8 aufgrund seiner haubenförmigen Form an den Oberkanten des Stück- oder Packgutes 2 hängenbleibt.

Die haubenförmige Gestalt des elastischen Folienabschnittes 8 kann hierbei insbesondere bei faltschlauchförmiger Ausgestaltung des Folienabschnittes 8 durch Verschweißen benachbarter Lagen des Folienabschnittes 8 zumindest im Bereich der Ecken erzielt werden. Es kann aber auch wie üblich der Folienabschnitt 8 auf der gesamten Breite verschweißt werden oder lediglich Teile der entsprechenden Folienabschnittkanten. Auch können als bereits fertig konfektionierte Folienhauben ausgebildete Folienabschnitte 8 verwendet werden.

Währenddessen kann bereits ein weiterer Folienabschnitt 8 in der Raffeinrichtung 3 gerafft werden.

## Patentansprüche

1. Verfahren zum Umhüllen von Stück- oder Packgut (2) mit einem zumindest in etwa haubenförmigen elastischen Folienabschnitt (8), wobei der Folienabschnitt (8) gerafft und über das Stück- oder Packgut (2) übergezogen wird, wobei der Folienabschnitt (8) von einer Raffeinrichtung (3) gerafft und dann von einer separat bewegbaren Überzieheinrichtung (6) übernommen und anschließend über das Stück- oder Packgut (2) übergezogen wird, wobei die Überzieheinrichtung (6) zur Übernahme des gerafften Folienabschnittes (8) von der Raffeinrichtung (3) und zum Überziehen des Folienabschnittes (8) über das Stück- oder Packgut (2) sowohl in Richtung der Stück- oder Packguthöhe als auch in der Ebene von Stück- oder Packgutbreite und -länge verlagerbare Halteeinrichtungen (7) aufweist, die nach Positionierung innerhalb des gerafften haubenförmigen Folienabschnittes (8) auseinander bewegt werden, wobei die Raffeinrichtung (3) in Überziehrichtung gesehen vor der Überzieheinrichtung (6) ortsfest angeordnet ist und die Raffeinrichtung (3) sowie die Überzieheinrichtung (6) in Überziehrichtung gesehen vor dem in Überziehposition befindlichen Stück- oder Packgut (2) vorgesehen sind, und wobei den Folienabschnitt (8) während des Raffens haltende Halteelemente (5) durch Verlagerung, insbesondere Verschwenken, den Folienabschnitt (8) freigeben, **dadurch gekennzeichnet, dass** der Folienabschnitt von der Überzieheinrichtung (6) vor dem Überziehen gestreckt wird, und dass bereits ein weiterer Folienabschnitt von der Raffeinrichtung gerafft wird während der vorhergehende Folienabschnitt noch über das Stück- oder Packgut übergezogen wird.

2. Verfahren nach Anspruch 1, **dadurch gekennzeichnet, dass** die Halteeinrichtungen (7) durch Auseinanderbewegen in der Ebene der Stück- oder Packgutbreite und -länge den Folienabschnitt strecken.

3. Verfahren nach Anspruch 1 oder 2, **dadurch gekennzeichnet, dass** die Halteeinrichtungen (7) durch Bewegen entlang der Stück- oder Packguthöhe den haubenförmigen Folienabschnitt (8) über das Stück- oder Packgut (2) überziehen.

4. Verfahren nach einem der Ansprüche 1 bis 3, **dadurch gekennzeichnet, dass** die haubenähnliche Form des Folienabschnittes (8) unmittelbar vor dem Raffen durch die Raffeinrichtung durch ein zumindest im Bereich der Ecken erfolgendes Verschweißen von zumindest benachbarten Lagen des insbesondere faltenschlauchförmigen Folienabschnittes (8) erzielt wird.

5. Vorrichtung (1) zum Umhüllen von Stück- oder Packgut (2) mit einem zumindest in etwa haubenförmigen elastischen Folienabschnitt (8), der gerafft und gestreckt und anschließend über das Stück- oder Packgut (2) gezogen wird, wobei zum unabhängigen Raffen eines zweiten Folienabschnittes (8) und Überziehen des ersten Folienabschnittes (8) über das Stück- oder Packgut (2) jeweils eine separate Raffeinrichtung (3) und eine getrennt von der Raffeinrichtung (3) entlang des Stück- oder Packgutes (2) bewegliche Überzieheinrichtung (6) vorgesehen ist, zur Durchführung des Verfahrens nach einem der Ansprüche 1 bis 3, wobei die Raffeinrichtung (3) in Überziehrichtung gesehen vor der Überzieheinrichtung (6) ortsfest angeordnet ist und die Raffeinrichtung (3) sowie die Überzieheinrichtung (6) in Überziehrichtung gesehen vor dem in Überziehposition befindlichen Stück- oder Packgut (2) vorgesehen sind, und wobei die Überzieheinrichtung (6) zum Übernehmen und Überziehen des Folienabschnittes (8) sowohl in Richtung der Stück- oder Packguthöhe als auch in der Ebene von Stück- oder Packgutbreite und -länge verlagerbare Halteeinrichtungen (7) aufweist, **dadurch gekennzeichnet, dass** die Halteeinrichtungen derart verlagerbar sind, dass der Folienabschnitt (8) vor dem Überziehen gestreckt wird, und dass bereits während des Überziehens eines Folienabschnitts durch die Überzieheinrichtung ein weiterer Folienabschnitt durch die Raffeinrichtung (3) gerafft wird.

6. Vorrichtung (1) nach Anspruch 5, **dadurch gekennzeichnet, dass** wenigstens eine zumindest benachbarte Lagen des insbesondere faltschlauchförmigen Folienabschnittes (8) zur Erzielung einer haubenähnlichen Form zumindest im Bereich der Ecken jeweils miteinander verbindende Schweißeinrichtung vorgesehen ist.

7. Vorrichtung (1) nach Anspruch 5 oder 6, **dadurch gekennzeichnet, dass** die Raffeinrichtung (3) wenigstens zwei diagonal gegenüberliegende Raffräder (4) aufweist.

8. Vorrichtung (1) nach einem der Ansprüche 5 bis 7, **dadurch gekennzeichnet, dass** die Raffeinrichtung (3) den Folienabschnitt (8) während des Raffens innenseitig haltende und den Folienabschnitt (8) bei der Übernahme durch die Überzieheinrichtung (6) freigebende, insbesondere verschwenkbare Halteelemente (5) aufweist.

## Claims

1. Method for wrapping unit loads or packaged goods (2) with a section of elastic film (8), which is at least approximately hood-shaped, wherein the section of film is gathered and pulled over the unit loads or packaged goods (2), wherein the section of film (8) is gathered by a gathering device (3), is then taken over by a separately moveable pulling-over device (6) and is subsequently pulled over the unit loads or packaged goods (2), wherein the pulling-over device (6) includes displaceable retaining devices (7) for the taking over of the gathered section of film (8) from the gathering device (3) and for the pulling-over of the section of film (8) over the unit loads or packaged goods (2) both in the direction of the height of the unit loads or packaged goods and in the plane of the depth and length of the unit loads and packaged goods, which retaining devices (7) are moved apart from one another after positioning inside the gathered hood-shaped section of film (8), wherein the gathering device (3), when viewed in the pulling-over direction, is non-displaceably disposed upstream of the pulling-over device (6), and the gathering device (6) as well as the pulling-over device (6), when viewed in the pulling-over direction, are provided upstream of the unit loads or packaged goods (2) situated in the pulling-over position, and wherein retaining elements (5), which retain the section of film (8) during the gathering, release the section of film (8) by means of displacement, more especially pivoting, **characterised in that** the section of film is stretched by the pulling-over device (6) before the pulling-over operation, and **in that** another section of film is already being gathered by the gathering device, whilst the preceding section of film is still being pulled over the unit loads or packaged goods.

2. Method according to claim 1, **characterised in that** the retaining devices (7) stretch the section of film by means of moving apart in the plane of the depth and length of the unit loads or packaged goods (2).

3. Method according to claim 1 or 2, **characterised in that** the retaining devices (7) pull the hood-shaped section of film (8) over the unit loads or packaged goods (2) by means of moving along the height of the unit loads of packaged goods.

4. Method according to one of claims 1 to 3, **characterised in that** the hood-shaped shape of the section of film (8) is achieved directly before the gathering by means of the gathering device by means of a soldering operating at least in the region of the corners of at least adjacent positions of the section of film (8), which is more especially in the shape of a corrugated hose.

5. Apparatus (1) for wrapping unit loads or packaged goods (2) with a section of elastic film (8) that is at least approximately hood-shaped, is gathered and stretched and subsequently pulled over the unit loads or packaged goods (2), wherein for the independent gathering of a second section of film (8) and the pulling of the first section of film (8) over the unit loads and packaged goods (2), there is provided respectively a separate gathering device (3) and a pulling-over device (6), which is moveable along the unit loads or packaged goods (2) separately from the gathering device (3), for the accomplishment of the method according to one of claims 1 to 3, wherein the gathering device (3), when viewed in the pulling-over direction, is non displaceably disposed upstream of the pulling-over device (6), and the gathering device (3) as well as the pulling-over device (6), when viewed in the pulling-over direction, are provided upstream of the unit loads or packaged goods situated in the pulling-over position, and wherein the pulling-over device (6) has displaceable retaining devices (7) for the taking over and pulling-over of the section of film (8) both in the direction of the height of the unit loads and packaged goods and in the direction of the depth and the length of the unit loads and packaged goods, **characterised in that** the retaining devices are displaceable in such a manner that the section of film (8) is stretched before the pulling-over operation, and **in that** during the pulling-over of a section of film by the pulling-over device, another section of film is being gathered by the gathering device (3).

6. Apparatus (1) according to claim 5, **characterised in that** there is provided at least one soldering device, which respectively interconnects at least in the region of the comers at least adjacent positions of the more especially corrugated hose-shaped section of film (8) for obtaining a hood-shaped shape.

7. Apparatus (1) according to claim 5, **characterised in that** the gathering device (3) has at least two gathering wheels (4), which are situated diagonally opposite each other.

8. Apparatus (1) according to one of claims 5 to 7, **characterised in that** the gathering device (3) includes retaining elements (5), which retain the section of film (8) on the inside during the gathering operation and release, more especially by pivoting, the section of film (8) for the taking over by the pulling-over device (6).

## Revendications

1. Procédé pour envelopper des articles (2) à emballage individuel ou par lots, avec un tronçon de feuille (8) élastique, au moins à peu près en forme de hotte ou de calotte, sachant que le tronçon de feuille (8) est retroussé et appliqué en revêtement sur l'article (2) à emballage individuel ou par lots, le tronçon de feuille (8) étant retroussé par un dispositif de contraction ou de retroussement (3), puis pris en charge par un dispositif de revêtement ou d'application sous traction (6) déplaçable séparément et, ensuite, appliqué ou revêtu sur l'article (2) à emballage individuel ou par lots, sachant que le dispositif de revêtement ou d'application sous traction (6), afin de transférer le tronçon de feuille (8), retroussé par le dispositif de retroussement (3), et d'appliquer sous traction le tronçon de feuille (8) au-dessus de l'article (2) à emballage individuel ou par lots, présente des dispositifs de maintien (7), déplaçables tant dans la direction de la hauteur de l'article à emballage individuel ou par lots, qu'également dans le plan de la largeur et de la longueur de l'article à emballage individuel ou par lots, dispositifs de maintien qui, après positionnement à l'intérieur du tronçon de feuille (8) en forme de hotte retroussée, sont écartés les uns des autres, sachant que le dispositif de retroussement (3) est disposé, en observant dans la direction de revêtement ou d'application sous traction, devant le dispositif d'application sous traction (8), de façon localement fixe, et le dispositif de retroussement (3), ainsi que le dispositif de revêtement ou d'application sous traction (6), en observant dans la direction de revêtement ou d'application sous traction, sont prévus devant l'article (2) à emballage individuel ou par lots se trouvant en position de revêtement ou d'application sous traction, et des éléments de maintien (5), maintenant le tronçon de feuille (8) pendant le retroussement, libérant le tronçon de feuille (8) par un déplacement, en particulier un pivotement, **caractérisé en ce que** le tronçon de feuille est étiré, avant de procéder au revêtement ou à l'application sous traction, par le dispositif d'application sous traction (6), et **en ce qu'**un autre tronçon de feuille est déjà retroussé par le dispositif de retroussement, tandis que le tronçon de feuille précédent est encore appliqué ou revêtu de façon étirée sur l'article à emballage individuel ou par lots.

2. Procédé selon la revendication 1, **caractérisé en ce que** les dispositifs de maintien (7) effectuent l'opération d'étirage du tronçon de feuille par un déplacement d'écartement, effectué dans le plan de la largeur et de la longueur de l'article à emballage individuel ou par lots.

3. Procédé selon la revendication 1 ou 2, **caractérisé en ce que** les dispositifs de maintien (7) procèdent à un revêtement ou une application avec traction du tronçon de feuille (8) en forme de hotte, au-dessus de l'article (2) à emballage individuel ou par lots, par un déplacement le long de la hauteur de l'article à emballage individuel ou par lots.

4. Procédé selon l'une des revendications 1 à 3, **caractérisé en ce que** la forme, analogue à une hotte, du tronçon de feuille (8) est obtenue directement avant le retroussement au moyen du dispositif de retroussement, par un soudage, s'effectuant au moins dans la zone des angles, sur des couches au moins voisines du tronçon de feuille (8), en particulier ayant la forme d'un tuyau à soufflet ou accordéon.

5. Dispositif (1) pour l'enveloppement d'articles (2) à emballage individuel ou par lots, avec un tronçon de feuille (8) élastique, au moins à peu près en forme de hotte ou de calotte, qui est retroussé et étiré et, ensuite, tiré ou revêtu sur l'article (2) à emballage individuel ou par lots, sachant que, pour effectuer le retroussement indépendant d'un deuxième tronçon de feuille (8) et le revêtement ou l'application sous traction par le premier tronçon de feuille (8) sur l'article (2) à emballage individuel ou par lots, il est prévu respectivement un dispositif de retroussement (3) séparé et un dispositif de revêtement ou d'application sous traction (6), mobile séparément du dispositif de retroussement (3), le long de l'article (2) à emballage individuel ou par lots, pour la mise en oeuvre du procédé selon l'une des revendications 1 à 3, sachant que le dispositif de retroussement (3), en observant dans la direction de revêtement ou d'application sous traction, est disposé de façon localement fixe devant le dispositif de revêtement ou d'application sous traction (6), et le dispositif de retroussement (3), ainsi que le dispositif de revêtement ou d'application sous traction (6), en observant dans la direction de revêtement ou d'application sous traction, sont prévus devant l'article (2) à emballage individuel ou par lots, se trouvant à la position de revêtement ou d'application sous traction, et le dispositif de revêtement ou d'application sous traction (6) présente, pour effectuer la prise en charge et l'application sous traction ou le revêtement du tronçon de feuille (8), des dispositifs de maintien (7) déplaçables tant dans la direction de la hauteur de l'article à emballage individuel ou par lots, qu'également dans le plan de la largeur et de la longueur de l'article à emballage individuel ou par lots, **caractérisé en ce que** les dispositifs de maintien sont déplaçables de manière que le tronçon de feuille (8) est étiré avant le revêtement ou l'application sous traction et que, déjà pendant le revêtement ou l'application sous traction d'un tronçon de feuille, au moyen du dispositif de revêtement ou d'application sous traction, un autre tronçon de feuille est retroussé au moyen du dispositif de retroussement (3).

6. Dispositif (1) selon la revendication 5, **caractérisé en ce qu'**au moins un dispositif de soudage, reliant ensemble au moins des couches voisines du tronçon de feuille (8), en particulier en forme de tuyaux à soufflet, pour obtenir une forme analogue à une hotte, au moins dans la zone des angles, est prévu.

7. Dispositif (1) selon la revendication 5 ou 6, **caractérisé en ce que** le dispositif de retroussement (3) présente deux roues de retroussement (4), opposées en diagonale.

8. Dispositif (1) selon la revendication 5 à 7, **caractérisé en ce que** le dispositif de retroussement (3) présente des éléments de maintien (5), en particulier des éléments de maintien susceptibles de pivoter, qui maintiennent le tronçon de feuille (8) du côté intérieur pendant le retroussement et libèrent le tronçon de feuille (8) lors de la prise en charge par le dispositif d'application sous traction (6).
